# EUROPÄISCHE PATENTSCHRIFT

(11) **EP 0 676 777 B1**
(45) Veröffentlichungstag und Bekanntmachung des Hinweises auf die Patenterteilung: **01.07.1998**
(21) Anmeldenummer: 95104676.2
(22) Anmeldetag: 29.03.1995
(51) Int. Cl.: H01F 36/00, H01F 27/28

(54) **Lokomotivtransformator und Wicklungsanordnung hierzu**
Locomotive transformer and winding device therefor
Transformateur de locomotive et son système d'enroulement

(30) Priorität: 11.04.1994 DE 4412412
(43) Veröffentlichungstag der Anmeldung: 11.10.1995
(73) Patentinhaber: SIEMENS AKTIENGESELLSCHAFT, 80333 München (DE)
(72) Erfinder: Müller, Walter, Dr., D-82449 Uffing (DE)

(56) Entgegenhaltungen:
- EP-A- 0 590 546
- CH-A- 337 933
- CH-A- 397 066
- GB-A- 1 230 579
- PATENT ABSTRACTS OF JAPAN vol. 006 no. 060 (E-102) ,17.April 1982 & JP-A-57 001211 (TOSHIBA CORP) 6.Januar 1982,

## Beschreibung

Die Erfindung betrifft einen Lokomotivtransformator mit supraleitenden Wicklungen, eine Wicklungsanordnung hierzu, und eine Fahrantriebsanordnung mit Teilantrieben und einem Transformator mit Supraleitenden Wicklungen.

Transformatoren zum Einsatz auf elektrisch angetriebenen Lokomotiven sind in der Regel als Einphasentransformatoren ausgebildet. Die über den Fahrdraht dem Transformator zugeführte Wechselspannung beträft je nach Bahnstrangsystem 15 oder 25 KV. Zum Antrieb sind meistens mehrere Motoren vorgesehen. Um die erforderliche Antiebsleistung elektrisch steuern zu können, ist es erforderlich, daß der Transformator unterspannungsseitig mehrere den jeweiligen Motoren zugeordnete Wicklungen aufweist, die je nach geforderter Anzahl eingeschalteter Motoren nur teilweise von einem Strom durchflossen sind. Aus diesen Anforderungen heraus weisen konventionelle Transformatoren mehrere, beispielsweise vier, Unterspannungswicklungen auf, die jeweils einer Oberspannungswicklung zugeordnet sind. Die Oberspannungswicklungen sind dabei parallel geschaltet. Die Wicklungen sind gegebenenfalls auf verschiedenen Schenkeln eines Eisenkerns verteilt, wobei eine jede Wicklungsgruppe auch noch eine zusätzliche Wicklung für den Betrieb einer Heizungsanlage oder sonstigen Hilfseinrichtungen aufweisen kann. Derartige konventionelle Transformatoren weisen bauartbedingt bekannte Nachteile, wie z. B. Verluste und große Baumaße, auf.

Aus der DE-OS 42 32 703 ist ein Lokomotivtransformator mit einer supraleitenden Wicklungsanordnung bekannt. Nähere Angaben zu seinen Wicklungen oder zu seinem Kern sind dort nicht gemacht. Aus der CH-PS 397 066 ist eine Wicklungsanordnung für einen Fahrzeugtransformator bekannt, deren Oberspannungsteilwicklungen in Reihe geschaltet sind.

Aus PATENT ABSTRACTS OF JAPAN, vol.6, no.60 (E-102) (938),17. April 1982, JP-A-57001211 ist ein Transformator bekannt, der eine Mehrzahl von Wicklungsgruppen umfaßt, welche auf einem Kern angeordnet sind. Dabei sind Erregerwicklungen parallel und wechselstromseitige Wicklungen in Serie geschaltet. Dieser Transformator ist in seiner Baugröße derart dimensioniert, daß er für einen Transport auf Eisenbahnschienen geeignet ist.

Der Erfindung liegt die Aufgabe zugrunde, einen Lokomotivtransformator, eine Wicklungsanordnung hierzu, und eine Fahrantriebsanordnung anzugeben, die einen kleinen Aufbau und damit einen geringen Platzbedarf aufweisen.

Die Lösung der Aufgabe gelingt mit einem Transformator gemäß den Merkmalen des Anspruchs 1.

Der Erfinder ging hier einen völlig neuen Weg, wobei er die Technik des supraleitenden Transformators bei Lokomotiven einführte. Er stellt fest, daß trotz des zusätzlichen Aufwandes zur Erzielung der Supraleitung Vorteile beim Einsatz dieser Technik zu erwarten ist. Der Aktivteil des neuen Transformators weist dabei ca. nur ein 1/6 des Gewichts eines konventionellen Transformators auf. Abschätzungen für die Kerngröße eines Transformators mit etwa 5 MVA ergaben, daß gegenüber einem konventionellen Kern mit einer Fenstergröße von ca. 1000 x 390 mm nur noch 830 x 200 mm benötigt werden.

Die Lösung der Aufgabe bezüglich der Wicklungsanordnung gelingt erfindungsgemäß mit den Merkmalen des Anspruchs 6.

Eine derartige Wicklungsanordnung läßt bei einer supraleitenden Ausführung einen besonders kleinen Aufbau zu, da nur dünne Leiter für die Oberspannungswicklungen (OS)verwendet werden. Die Größe der für die Supraleitung erforderlichen Kühlanlage ist unter anderem von der Restverlustwärme in den Supraleitern abhängig. Diese wird in der Regel mit einem konstanten Wert je Volumeneinheit angegeben. Das heißt, daß das verwicklete Drahtvolumen oder die gesamte benötigte Drahtlänge die Dimensionierung der Kühlanlage bestimmen. Die konventionelle Wicklungsanordnung, bei der jeder Unterspannungswicklung (US) ein Parallelzweig der OS zugeordnet ist, würde im supraleitenden Transformator gegenüber der vorgeschlagenen Lösung zu einem enormen Mehraufwand führen. Der hier verwendete Leiterdraht ist als Multifiliamentleiter ausgebildet und kann Ströme bis zu 450 Ampere (A) führen. Er ist damit in der Regel für den Gesamtstrombedarf der OS (im vorliegenden Beispiel ca. 300 A) ausreichend. Die Aufteilung auf vier Parallelzweige wie beim Stand der Technik würde daher zu einer erheblichen Überdimensionierung führen.

Bevorzugt sind die vier OS in Serie geschaltet, denen je eine US und bevorzugt zwei parallelgeschaltete Schubwicklungen zugeordnet sind. Die Schubwicklungen sorgen sowohl für mehrfach konzentrisch geschlossene Streuflußpfade - ohne daß Streufluß das Kyrostatgefäß verläßt-, als auch für eine einwandfreie Energieübertragung auf die gerade stromführende/n US in Kommutierungslücken anderer US. Mit Vorteil können die Schubwicklungen als Energieversorgung für Hilfseinrichtungen, beispielsweise Heizungen oder Hilfsbetriebeumrichter, dienen.

Bevorzugt ist die Wicklungsanordnung auf einem Schnittbandkern angeordnet, der einen vorgegebenen Luftspalt aufweist. Dadurch wird erzielt, daß trotz vorgegebener Gleichstromdurchflutung des Kerns der Gleichflußanteil nur einen Bruchteil der Sättigungsinduktion ausmacht. Auf diese Weise wird dem Problem der Gleichstromvormagnetisierung bei Einphasenkernen von Umrichtertransformatoren begegnet. Dies kann nämlich zur völligen Sättigung des Kerns im Betrieb führen und gilt insbesondere für Transformatoren mit kleinem Kernquerschnitt, was bei gewichtsminimierten Transformatoren mit supraleitenden Wicklungen besonders ausgeprägt sein kann. Vorteilhafte Ausgestaltungen sind in den Unteransprüchen angegeben.

Die Lösung der Aufgabe bezüglich der Fahrantriebsanordnung gelingt erfindungsgemäss mit den Merkmalen des Anspruchs 12.

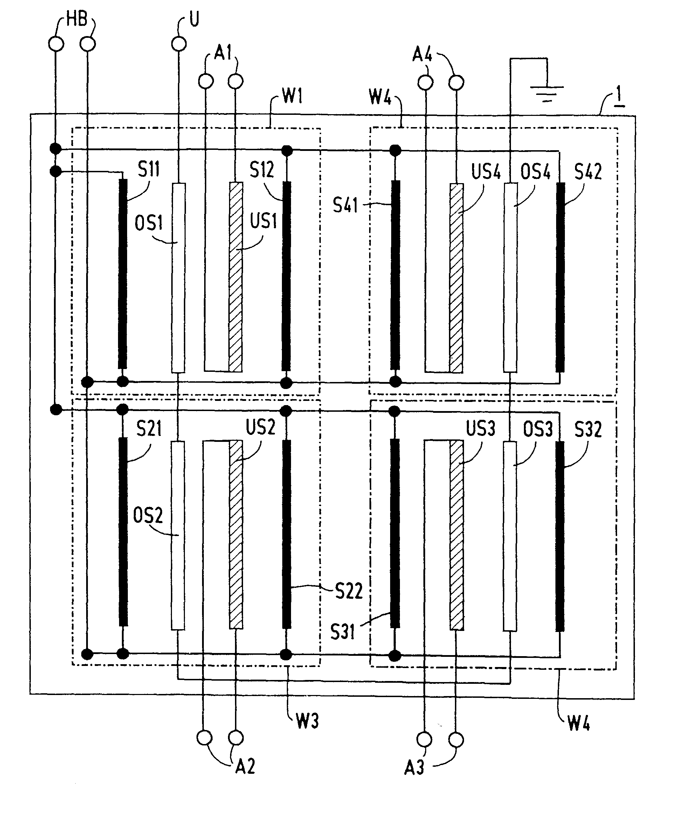

Die Erfindung und weitere Vorteile werden nachfolgend anhand der Zeichnung beispielhaft näher erläutert.

Die Figur zeigt rein schematisch eine Wicklungsanordnung 1 eines supraleitenden Transformators für Elektromotoren von umrichtergesteuerten Fahrantrieben, insbesondere zum Einsatz auf Lokomotiven. Die Versorgungsspannung U wird dabei in Reihe geschalteten Oberspannungswicklungen (OS) OS1 bis OS4 zugeführt. Eine derartige Reihenschaltung der OS war bisher bei herkömmlichen Transformatoren aufgrund der hohen Ströme und der dafür benötigten Leiterquerschnitte nicht möglich. Dies ist erst mit hochbelastbaren Supraleitern möglich, die nur geringe Leiterquerschnitte haben. Den OS1 bis OS4 sind jeweils zugeordnete Unterspannungswicklungen (US) US1 bis US4 räumlich und elektrisch zugeordnet. Die jeweiligen US1 bis US4 sind dabei elektrisch mit ihren Anschlüssen A1 bis A4 jeweils einer nicht näher gezeigten Antriebseinheit mit einem Umrichter und einem Fahrmotor zugeordnet. Um eine gleichmäßige Energieverteilung in der Wicklungsanordnung 1 zu erzielen, umfassen die jeweiligen einem Fahrmotor zugeordneten Wicklungsgruppen W1 bis W4 jeweils zwei Schubwicklungen S11 bis S42. Die Schubwicklungen S11 bis S42 sorgen für mehrfach konzentrisch in sich geschlossene Streuflußpfade, ohne daß Streufluß das nicht näher gezeigte Kryostatgefäß verläßt. Sie sorgen auch für eine einwandfreie Energieübertragung auf die jeweils gerade stromführende US in Kommutierungslücken jeweils anderer US. Die Stromverteilung ist dadurch verbessert.

Die bevorzugt parallel geschalteten Schubwicklungen S11 bis S42 werden auch zur Erzeugung einer Spannung HB für Hilfsbetriebe, insbesondere für Hilfsbetriebeumrichter und sonstige Eigenbedarfsversorgungen, verwendet.

Die gezeigte Wicklungsanordnung 1 ist beispielhaft für vier Fahrmotoren ausgelegt.

Der nicht näher dargestellte Kern der Wicklungsanordnung 1 kann vorteilhafterweise als Schnittbandkern, insbesondere mit definiert eingestellten Luftspalten, ausgebildet sein. Dadurch beträgt der Gleichflußanteil nur einen Bruchteil der Sättigungsinduktion bei der durch Zündwinkel-Unsymmetrie der Umrichter vorgegebenen Gleichstromdurchflutung. Da der Transformator mit seiner Wicklungsanordnung 1 supraleitend ausgeführt ist, ist dieser in einem nicht dargestellten Kyrostatgefäß mit zugehöriger Kühleinrichtung angeordnet. Das Kryostatgefäß enthält zwei Tunnel mit Kreis- oder Rechteck-Querschnitt zur Aufnahme des Eisenkerns auf Raum- bzw. Betriebstemperatur, gegebenenfalls mit eigenem Kern-Kühlsystem. Die Wicklungsgruppen W1, W2 und W3, W4 sind dabei beispielsweise den Kernschenkeln 1 beziehungsweise 2 zugeordnet. Die Wicklungen der Wicklungsanordnung 1 können je nach Anwendungsfall beispielsweise als Scheibenspulen oder als Lagenwicklungen ausgeführt sein.

## Patentansprüche

1. Lokomotivtransformator mit einer supraleitenden Wicklungsanordnung (1), die eine Mehrzahl von Wicklungsgruppen (W1 bis W4) zur Versorgung von jeweils zuordbaren Teilantrieben umfaßt,
- wobei die Wicklungsgruppen (W1 bis W4) auf einem Kern in einem Kyrostatgefäß angeordnet sind und jeweils eine Oberspannungswicklung (OS1 bis OS4), eine Unterspannungswicklung (US1 bis US4) und zumindest eine Schubwicklung (S11 bis S42) aufweisen und
- wobei die Oberspannungswicklungen (OS1 bis OS4) in Reihe geschaltet sind.

2. Transformator nach Anspruch 1, wobei je Wicklungsgruppe (W1 bis W4) zwei Schubwicklungen (S11, S12; S21, S22; S31, S32; S41, S42) vorgesehen sind, welche zumindest paarweise parallel geschaltet sind.

3. Transformator nach Anspruch 2, wobei die Schubwicklungen (S11 bis S42) alle parallel geschaltet sind.

4. Transformator nach Anspruch 1,2 oder 3, wobei die Schubwicklungen (S11 bis S42) zum Erzeugen einer Hilfsspannung dienen.

5. Transformator nach einem der Ansprüche 1 bis 4, wobei der Kern als Schnittbandkern mit Luftspalt ausgebildet ist.

6. Wicklungsanordnung (1) für einen supraleitenden Transformator zur Versorgung von Teilantrieben, insbesondere Lokomotivantrieben,
- wobei je Teilantrieb eine Wicklungsgruppe (W1 bis W4) mit einer Unterspannungswicklung (US1 bis US4), einer Oberspannungswicklung (OS1 bis OS4) und zumindest einer Schubwicklung (S11 bis S42) vorgesehen ist, und
- wobei die Oberspannungswicklungen (OS1 bis OS4) in Reihe geschaltet sind.

7. Wicklungsanordnung nach Anspruch 6, wobei je Wicklungsgruppe (W1 bis W4) zwei Schubwicklungen (S11, S12; S21, S22; S31, S32; S41, S42) vorgesehen sind, welche zumindest paarweise parallel geschaltet sind.

8. Wicklungsanordnung nach Anspruch 7, wobei die Schubwicklungen (S11 bis S42) alle parallel geschaltet sind.

9. Wicklungsanordnung nach Anspruch 6,7 oder 8, wobei die Schubwicklungen (S11 bis S42) zum Erzeugen einer Hilfsspannung dienen.

10. Wicklungsanordnung nach einem der Ansprüche 6 bis 9, mit einem Kern, der als Schnittbandkern ausgebildet ist.

11. Wicklungsanordnung nach Anspruch 10, wobei der Schnittbandkern einen vorgegebenen Luftspalt aufweist.

12. Fahrantriebsanordnung mit einer Mehrzahl von Teilantrieben und einem Transformator, welcher eine supraleitende Wicklungsanordnung (1) umfaßt, die eine Mehrzahl von Wicklungsgruppen (W1 bis W4) zur jeweiligen Versorgung der Teilantriebe aufweist,
- wobei die Wicklungsgruppen (W1 bis W4) auf einem Kern in einem Kyrostatgefäß angeordnet sind und jeweils eine Oberspannungswicklung (OS1 bis OS4), eine Unterspannungswicklung (US1 bis US4) und zumindest eine Schubwicklung (S11 bis S42) aufweisen und
- wobei die Oberspannungswicklungen (OS1 bis OS4) in Reihe geschaltet sind.

## Claims

1. Locomotive transformer having a superconducting winding arrangement (1) which comprises a plurality of winding groups (W1 to W4) for the purpose of supplying section drives which can be respectively associated therewith,
- wherein the winding groups (W1 to W4) are arranged on a core in a cryostatic vessel and in each case have a high-voltage winding (OS1 to OS4), a low-voltage winding (US1 to US4) and at least one leakage suppression winding (S11 to S42), and
- wherein the high-voltage windings (OS1 to OS4) are connected in series.

2. Transformer according to claim 1, wherein two leakage suppression windings (S11, S12; S21, 522; S31, S32; S41, S42), which at least in pairs are connected in parallel, are provided for each winding group (W1 to W4).

3. Transformer according to claim 2, wherein the leakage suppression windings (S11 to S12) are all connected in parallel.

4. Transformer according to claim 1, 2 or 3, wherein the leakage suppression windings (S11 to S42) are used to generate an auxiliary voltage.

5. Transformer according to one of the claims 1 to 4, wherein the core is formed as a cut strip-wound core with an air gap.

6. Winding arrangement (1) for a superconducting transformer for the supply of section drives, in particular locomotive drives,
- wherein one winding group (W1 to W4) having a low-voltage winding (US1 to US4), a high-voltage winding (OS1 to OS4) and at least one leakage suppression winding (S11 to S42) is provided for each section drive, and
- wherein the high-voltage windings (OS1 to OS4) are connected in series.

7. Winding arrangement according to claim 6, wherein two leakage suppression windings (S11, S12; S21, S22; S31, S32; S41, S42), which at least in pairs are connected in parallel, are provided for each winding group (W1 to W4).

8. Winding arrangement according to claim 7, wherein the leakage suppression windings (S11 to S12) are all connected in parallel.

9. Winding arrangement according to claim 6, 7 or 8, wherein the leakage suppression windings (S11 to S12) are used to generate an auxiliary voltage.

10. Winding arrangement according to one of the claims 6 to 9, having a core which is formed as a cut strip-wound core.

11. Winding arrangement according to claim 10, wherein the cut strip-wound core has a predetermined air gap.

12. Travelling-drive arrangement having a plurality of section drives and a transformer which comprises a superconducting winding arrangement (1) which has a plurality of winding groups (W1 to W4) for respectively supplying the section drives,
- wherein the winding groups (W1 to W4) are arranged on a core in a cryostatic vessel and in each case have a high-voltage winding (OS1 to OS4), a low-voltage winding (US1 to US4) and at least one leakage suppression winding (S11 to 542), and
- wherein the high-voltage windings (OS1 to OS4) are connected in series.

## Revendications

1. Transformateur pour locomotive, comportant un agencement d'enroulements supraconducteurs (1), qui comprend une pluralité de groupes d'enroulements (W1 à W4) pour l'alimentation de dispositifs de commande, qui peuvent chaque fois leur être associés,
- dans lequel les groupes d'enroulements (W1 à W4) sont disposés sur un noyau dans une cuve de cryostat et présentent chacun un enroulement haute tension (OS1 à OS4), un enroulement basse tension (US1 à US4) et au moins un enroulement coulissant (S11 à S42), et
- dans lequel les enroulements haute tension (OS1 à OS4) sont montés en série.

2. Transformateur selon la revendication 1, dans lequel il est prévu, pour chaque groupe d'enroulements (W1 à W4), deux enroulements coulissants (S11, S12 ; S21, S22 ; S31, S32 ; S41, S42), qui sont montés en parallèle au moins par paires.

3. Transformateur selon la revendication 2, dans lequel les enroulements coulissants (S11 à S42) sont tous montés en parallèle.

4. Transformateur selon la revendication 1, 2 ou 3, dans lequel les enroulements coulissants (S11 à S42) servent à produire une tension auxiliaire.

5. Transformateur selon l'une des revendications 1 à 4, dans lequel le noyau est réalisés sous la forme d'un tore enroulé fendu avec entrefer.

6. Agencement d'enroulements (1) pour un transformateur à supraconduction, destiné à l'alimentation de groupes de commande, notamment de dispositifs de commande de locomotive,
- dans lequel il est prévu, pour chaque groupe de commande, un groupe d'enroulements (W1 à W4) comportant un enroulement basse tension (US1 à US4), un enroulement haute tension (OS1 à OS4), et au moins un enroulement coulissant (S11 à S42), et
- dans lequel les enroulements haute tension (OS1 à OS4) sont montés en série.

7. Agencement d'enroulements selon la revendication 6, dans lequel il est prévu, pour chaque groupe d'enroulements (W1 à W4), deux enroulements coulissants (S11, S12 ; S21, S22 ; S31, S32 ; S41, S42), qui sont montés en parallèle au moins par paires.

8. Agencement d'enroulements selon la revendication 7, dans lequel les enroulements coulissants (S11 à S42) sont tous montés en parallèle.

9. Agencement d'enroulements selon la revendication 6, 7 ou 8, dans lequel les enroulements coulissants (S11 à S42) servent à produire une tension auxiliaire.

10. Agencement d'enroulements selon l'une des revendications 6 à 9, comportant un noyau réalisé sous la forme d'un tore enroulé fendu.

11. Agencement d'enroulements selon la revendication 10, dans lequel le tore enroulé fendu présente un entrefer prédéfini.

12. Appareillage de roulement comportant une pluralité de groupes moteurs et un transformateur, qui comprend un agencement d'enroulements (1) à supraconduction, qui présente une pluralité de groupes d'enroulements (W1 à W4) pour l'alimentation correspondante des groupes moteurs,
- dans lequel les groupes d'enroulements (W1 à W4) sont disposés sur un noyau dans une cuve de cryostat et présentent chacun un enroulement haute tension (OS1 à OS4), un enroulement basse tension (US1 à US4) et au moins un enroulement coulissant (S11 à S42), et
- dans lequel les enroulements haute tension (OS1 à OS4) sont montés en série.
